# DEMANDE DE BREVET EUROPEEN

(11) **EP 3 660 415 A1**
(43) Date de publication de la demande: **03.06.2020**
(21) Numéro de dépôt: 19212581.3
(22) Date de dépôt: 29.11.2019
(51) Int. Cl.: F25B 13/00, F25B 29/00, F25B 30/02, F24D 17/00, F25B 41/00, F25B 41/06

(54) **APPAREIL DE RÉGULATION THERMIQUE D'UN BÂTIMENT, INSTALLATION ET PROCÉDÉ DE RÉGULATION ASSOCIÉS**

(30) Priorité: 29.11.2018 FR 1872046
(71) Demandeur: MULLER ET CIE, 75018 Paris (FR)
(72) Inventeur: FEVRIER, Bruno, 53100 MAYENNE (FR)
(74) Mandataire: Lavoix

(57) **Abrégé**

Cet appareil (11) de régulation thermique d'un réseau d'eau (10) d'un bâtiment, comporte :
- un premier circuit d'air (12) comprenant une entrée et une sortie d'air, un premier échangeur thermique air/eau (28) et un deuxième échangeur thermique air/fluide frigorigène (30) ;
- un deuxième circuit d'eau (14) comprenant une entrée et une sortie d'eau, un troisième échangeur thermique (36) eau/fluide frigorigène, et une vanne (42) reliant l'entrée d'eau à deux branches (44, 46) reliées au troisième échangeur (36), l'entrée et la sortie d'eau étant propres à être reliées audit réseau d'eau (10) ; et
- une pompe à chaleur (16) comprenant un troisième circuit (48) de fluide frigorigène fermé et reliant le deuxième échangeur (30) et le troisième échangeur (36), et un premier détendeur, le troisième circuit (48) comprenant une vanne à inversion de cycle (54).

## Description

La présente invention concerne un appareil de régulation thermique d'un réseau d'eau d'un bâtiment, une installation associée et un procédé de régulation d'une telle installation.

Il existe des installations de régulation thermique d'un bâtiment utilisant plusieurs terminaux thermodynamiques réversibles, tels que des pompes à chaleur, raccordés à une même boucle d'eau fermée interne au bâtiment, pour réchauffer ou refroidir localement un bâtiment.

La boucle d'eau équilibre en permanence les charges thermiques ou frigorifiques du bâtiment. Elle compense les déséquilibres des locaux du bâtiment à besoins thermiques très différents en fonction de leur orientation, tels que des locaux comprenant une façade nord ou sud, des locaux aveugles, des locaux informatiques, des salles de réunion, un hall d'entrée.

En particulier, les terminaux thermodynamiques qui doivent produire du froid rejettent les calories dans la boucle d'eau au profit des terminaux qui doivent satisfaire une demande de chauffage et qui puisent les calories nécessaires dans la boucle.

La boucle doit être maintenue dans une plage de température optimale prédéterminée, par exemple comprise entre 20°C et 31°C pour une optimisation du fonctionnement des terminaux.

En fonction de la charge thermique interne du bâtiment et du mode de fonctionnement des terminaux, la température de la boucle peut sortir de cette plage de température optimale prédéterminée. Il est alors nécessaire d'apporter ou d'évacuer des calories de la boucle d'eau au moyen de dispositifs annexes pour ramener la température dans ladite plage.

Cependant, dans les installations actuelles, les plages d'application de ces dispositifs annexes ne répondent pas directement à la demande de rétablissement de la température de la boucle dans la plage de température optimale prédéterminée.

Un objectif de la présente demande est de fournir un appareil simple permettant de satisfaire les besoins en refroidissement et/ou en chauffage d'un circuit d'eau interne d'un bâtiment et apte à répondre de manière satisfaisante à une demande de rétablissement de la température du circuit d'eau interne dans une plage de température prédéterminée, notamment dans la plage de température optimale prédéterminée.

A cet effet, l'invention a pour objet un appareil de régulation thermique d'un réseau d'eau d'un bâtiment, comportant :
- un premier circuit d'air, ledit premier circuit comprenant un ventilateur, une entrée d'air propre à être reliée à l'extérieur du bâtiment, une sortie d'air également propre à être reliée à l'extérieur dudit bâtiment, un premier échangeur thermique air/eau et un deuxième échangeur thermique air/fluide frigorigène, le premier échangeur thermique et le deuxième échangeur thermique étant interposés entre l'entrée d'air et la sortie d'air du premier circuit;
- un deuxième circuit d'eau comprenant une entrée d'eau, une sortie d'eau, un troisième échangeur thermique eau/fluide frigorigène, et une vanne à trois voies reliant l'entrée d'eau dudit deuxième circuit d'eau à une première branche et à une deuxième branche, lesdites branches étant toutes deux reliées au troisième échangeur thermique, le premier échangeur thermique étant disposé entre ladite vanne à trois voies et ledit troisième échangeur thermique sur une seule desdites deux branches, l'entrée d'eau et la sortie d'eau étant propres à être reliées audit réseau d'eau du bâtiment ; et
- une pompe à chaleur comprenant un troisième circuit de fluide frigorigène, le troisième circuit de fluide frigorigène étant fermé et reliant successivement le deuxième échangeur thermique, un système compresseur, le troisième échangeur thermique, et au moins un premier détendeur, le troisième circuit comprenant une vanne à inversion de cycle disposée entre le système compresseur et les échangeurs thermiques.

Suivant d'autres aspects avantageux de l'invention, l'appareil comporte l'une ou plusieurs des caractéristiques suivantes, prises isolément ou suivant toutes les combinaisons techniquement possibles :
- le troisième circuit de fluide frigorigène comprend une troisième branche de refroidissement et une quatrième branche de chauffage reliant chacune le troisième échangeur thermique au deuxième échangeur thermique sans passer par le système compresseur, la troisième branche de refroidissement comprenant le premier détendeur et la quatrième branche de chauffage comprenant un deuxième détendeur ;
- le premier détendeur présente une puissance supérieure à une puissance du deuxième détendeur ;
- la troisième branche et la quatrième branche du troisième circuit de fluide frigorigène comprennent chacune un dispositif anti-retour ; les dispositifs anti-retour de la troisième et de la quatrième branches autorisant respectivement un premier et un deuxième sens d'écoulement du fluide frigorigène, lesdits premier et deuxième sens étant opposés ;
- le premier sens d'écoulement du fluide frigorigène est orienté du deuxième échangeur thermique vers le troisième échangeur thermique ; et le deuxième sens d'écoulement du fluide frigorigène est orienté du troisième échangeur thermique vers le deuxième échangeur thermique ;
- la troisième branche et la quatrième branche sont raccordées fluidiquement, en partageant un tronçon de raccordement, le tronçon de raccordement étant disposé, pour chacune desdites troisième et quatrième branches, entre le dispositif anti-retour et le détendeur de ladite branche ;
- l'appareil est monobloc ;
- ledit tronçon de raccordement comprend au moins une bouteille accumulatrice de liquide et/ou une électrovanne ; et
- le système compresseur comprend deux compresseurs, les deux compresseurs étant propres à être mis en marche de manière indépendante.

L'invention se rapporte aussi à une installation comprenant un bâtiment comportant un réseau d'eau et un appareil de régulation thermique du réseau d'eau tel que décrit ci-dessus, l'entrée d'air et la sortie d'air étant reliées à l'extérieur du bâtiment, l'entrée d'eau et la sortie d'eau étant reliées audit réseau d'eau du bâtiment.

Suivant d'autres aspects avantageux de l'invention, l'installation comporte l'une ou plusieurs des caractéristiques suivantes, prises isolément ou suivant toutes les combinaisons techniquement possibles :
- l'entrée d'eau et la sortie d'eau sont raccordées fluidiquement au réseau d'eau du bâtiment, le deuxième circuit d'eau et le réseau d'eau formant ainsi une boucle fermée ;
- l'installation comprend un échangeur thermique d'interface interposé entre le deuxième circuit d'eau et le réseau d'eau ; l'échangeur d'interface comprenant une entrée d'eau secondaire et une sortie d'eau secondaire, chacune étant raccordée fluidiquement au réseau d'eau ; l'entrée d'eau et la sortie d'eau du deuxième circuit étant raccordées fluidiquement l'une à l'autre par l'intermédiaire de l'échangeur d'interface, le deuxième circuit d'eau formant ainsi une boucle fermée, isolée fluidiquement du réseau d'eau.
- l'installation comprend au moins un dispositif de régulation de température disposé sur le réseau d'eau, ledit dispositif de régulation étant apte à prélever ou céder des calories à l'eau dudit réseau.

L'invention se rapporte en outre à un procédé de régulation d'une installation telle que décrite ci-dessus, comprenant :
- la mesure d'une température en un point du deuxième circuit d'eau ;
- si la température mesurée audit point du deuxième circuit d'eau est supérieure à une température de consigne maximale :
   - la mesure d'une température d'entrée d'air extérieur sur le premier circuit, en amont du premier et du deuxième échangeurs thermiques ;
   - la mesure d'une température d'entrée d'eau en amont du premier échangeur;
   - si la température d'entrée d'eau est supérieure à un premier seuil dépendant de ladite température d'entrée d'air extérieur, la mise en circulation de l'eau du deuxième circuit dans le premier échangeur pour refroidir l'eau circulant dans le premier échangeur, et/ou ;
- ou, si la température mesurée audit point du deuxième circuit d'eau est inférieure à une température de consigne minimale:
   - la mesure d'une température d'entrée d'air extérieur sur le premier circuit, en amont du premier et du deuxième échangeurs thermiques;
   - la mesure d'une température d'entrée d'eau en amont du premier échangeur;
   - si la température d'entrée d'eau est inférieure à un deuxième seuil dépendant de ladite température d'entrée d'air extérieur, la mise en circulation de l'eau du deuxième circuit dans le premier échangeur pour chauffer l'eau circulant dans le premier échangeur.

Suivant d'autres aspects avantageux de l'invention, le procédé comporte l'une ou plusieurs des caractéristiques suivantes, prises isolément ou suivant toutes les combinaisons techniquement possibles :
- le procédé comprend de plus, si la température mesurée audit point du deuxième circuit d'eau est supérieure à la température de consigne maximale et si la température d'entrée d'eau est inférieure audit premier seuil, la mise en marche du système compresseur et la configuration de la vanne à inversion de cycle de sorte que le fluide frigorigène prélève des calories à l'eau circulant dans le troisième échangeur pour refroidir l'eau circulant dans le troisième échangeur.
- le procédé comprend de plus, si la température mesurée audit point du deuxième circuit d'eau est inférieure à la température de consigne minimale et si la température d'entrée d'eau est supérieure audit deuxième seuil, la mise en marche du système compresseur et la configuration de la vanne à inversion de cycle de sorte que le fluide frigorigène cède des calories à l'eau circulant dans le troisième échangeur pour chauffer l'eau circulant dans le troisième échangeur ;
- l'installation comprend au moins un dispositif de régulation de température disposé sur le réseau d'eau, ledit dispositif de régulation étant apte à prélever ou céder des calories à l'eau du réseau d'eau, ledit dispositif de régulation étant propre à fonctionner de manière optimale lorsque l'eau du réseau d'eau présente une température comprise dans une plage de température optimale prédéterminée, la température de consigne maximale étant inférieure ou égale à une borne supérieure de ladite plage de température optimale prédéterminée et la température de consigne minimale étant supérieure ou égale à une borne inférieure de ladite plage de température ; et
- le procédé comprend :
   - la mesure d'une température de contrôle de l'eau en au moins un point du deuxième circuit, et ;
   - si la température de contrôle de l'eau mesurée audit point est inférieure à une température seuil prédéterminée de prévention de gel de l'eau, une étape de prévention de gel comprenant la mise en circulation de l'eau dans le deuxième circuit à un débit prédéterminé.

L'invention sera mieux comprise à la lecture de la description qui va suivre, donnée uniquement à titre d'exemple non limitatif et faite en se référant aux dessins sur lesquels :
- [Fig 1] la figure 1 est une vue schématique d'une installation selon un premier mode de réalisation de l'invention dans un premier mode de fonctionnement ;
- [Fig 2] la figure 2 est une vue schématique d'un dispositif de régulation de l'installation de la figure 1 ;
- [Fig 3] [Fig 4] [Fig 5] [Fig 6] [Fig 7] les figures 3 à 7 sont respectivement des vues schématiques de l'installation de la figure 1, dans un deuxième, troisième, quatrième, cinquième et sixième modes de fonctionnement ;
- [Fig 8] la figure 8 est une vue schématique d'une installation selon un deuxième mode de réalisation de l'invention ; et
- [Fig 9] la figure 9 est une vue schématique d'une installation selon un troisième mode de réalisation de l'invention.

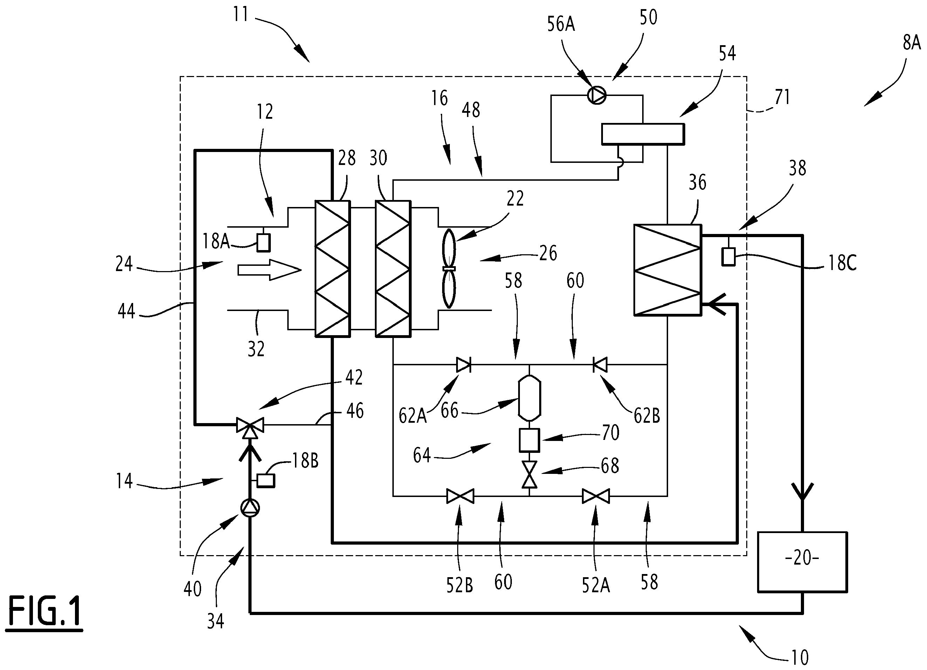

La figure 1 représente une vue schématique d'une installation 8A de régulation thermique, ou unité de confort individuelle (UCI) selon un premier mode de réalisation de l'invention.

L'installation 8A comprend : un bâtiment (non représenté) comportant un réseau d'eau 10 ; et un appareil de régulation thermique 11 dudit réseau d'eau 10.

Comme illustré sur la figure 1, l'installation 8A comprend en outre au moins un dispositif 20 de régulation d'une température à l'intérieur du bâtiment, le dispositif de régulation 20 étant alimenté par le réseau d'eau 10.

Le dispositif de régulation 20 est par exemple destiné à réguler la température de l'air d'une pièce du bâtiment, en prélevant ou en rejetant des calories sur le réseau d'eau 10.

L'au moins un dispositif de régulation 20 est disposé sur le réseau 10.

De préférence, l'installation 8A comprend plusieurs dispositifs de régulation 20 disposés sur le réseau 10.

Chaque dispositif de régulation 20 est activable ou désactivable. Dans l'état activé, il est configuré pour prélever ou céder des calories à l'eau circulant dans le réseau 10. Dans l'état désactivé, le dispositif de régulation 20 est propre à être traversé par l'eau du réseau 10 sans échange thermique significatif.

Plus précisément, chaque dispositif de régulation 20 est configuré, dans l'état activé, pour diminuer une température intérieure du bâtiment en cédant des calories à l'eau du réseau 10 et/ou pour augmenter une température intérieure du bâtiment en prélevant des calories à l'eau du réseau 10. Chaque dispositif de régulation 20 comprend par exemple un système de pompe à chaleur couplé au réseau 10.

De préférence, chaque dispositif de régulation 20 est individuellement activable ou désactivable par un utilisateur. Les dispositifs de régulation 20 sont notamment situés dans plusieurs pièces différentes du bâtiment pour une régulation individuelle de la température de chaque pièce.

En particulier, chaque dispositif de régulation 20 est propre à fonctionner de manière optimale lorsque l'eau du réseau 10 présente une température comprise dans une plage de température optimale prédéterminée [Tₘᵢₙ₁-Tₘₐₓ₁], typiquement indiquée par le fabricant du dispositif de régulation 20.

La plage de température optimale prédéterminée [Tₘᵢₙ₁-Tₘₐₓ₁] présente une borne inférieure de température optimale Tₘᵢₙ₁ et une borne supérieure de température optimale Tₘₐₓ₁.

La borne inférieure de température optimale Tₘᵢₙ₁ est par exemple inférieure ou égale à 20°C et la borne supérieure de température optimale Tₘₐₓ₁ est par exemple supérieure ou égale à 30°C. Ces bornes sont adaptées aux caractéristiques des dispositifs de régulation 20.

L'appareil 11 est destiné à être raccordé au réseau d'eau 10, comme représenté sur la figure 1.

L'appareil 11 comporte: un premier circuit 12 d'air extérieur au bâtiment, un deuxième circuit d'eau 14 et une pompe à chaleur 16. L'appareil 11 comprend aussi des sondes de température 18A, 18B, 18C comme décrites par la suite.

L'appareil 11 est de préférence monobloc comme décrit plus en détail par la suite.

Le premier circuit 12 d'air comprend au moins un ventilateur 22, une entrée d'air 24 reliée à l'extérieur du bâtiment, une sortie d'air 26 également reliée à l'extérieur dudit bâtiment, un premier échangeur thermique air/eau 28 et un deuxième échangeur thermique air/fluide frigorigène 30.

Le ventilateur 22 est propre à faire circuler l'air extérieur au bâtiment dans le premier circuit 12.

Plus précisément, l'air entrant par l'entrée d'air 24 provient d'une masse d'air extérieur entourant le bâtiment et la sortie d'air 26 donne sur ladite masse d'air. L'air circulant dans le premier circuit 12 ne provient donc pas de l'intérieur du bâtiment.

Dans un exemple de réalisation, le premier circuit d'air 12 comprend une conduite 32 dans laquelle circule l'air, une extrémité de la conduite 32 donnant sur la masse d'air extérieur entourant le bâtiment et formant ladite entrée d'air 24 et une autre extrémité de la conduite 32 donnant sur la masse d'air extérieur et formant ladite sortie d'air 26.

L'air circulant dans le premier circuit 12 en amont des premier et deuxième échangeurs 28, 30 présente une température sensiblement égale à la température de ladite masse d'air extérieur. On entend ici et par la suite les termes « amont » et « aval » en relation avec le sens d'écoulement du fluide mis en circulation.

Chacun des premier et deuxième échangeurs thermiques 28, 30 est situé sur le premier circuit 12. Chacun des premier et deuxième échangeurs thermiques 28, 30 est interposé entre l'entrée d'air 24 et la sortie d'air 26 du premier circuit 12.

Chacun des premier et deuxième échangeurs thermiques 28, 30 est notamment disposé dans la conduite 32.

L'air mis en circulation par le ventilateur 22 dans le premier circuit 12 traverse donc chacun des premier et deuxième échangeurs thermiques 28, 30.

Comme illustré sur la figure 1, le deuxième échangeur 30 est par exemple situé en aval du premier échangeur 28, c'est-à-dire plus proche de la sortie 14 que ledit premier échangeur 28.

Chacun des premier et deuxième échangeurs thermiques 28, 30 est par exemple de type ailettes aluminium serties sur tubes en cuivre.

Le deuxième circuit d'eau 14 comporte une entrée d'eau 34, le premier échangeur thermique air/eau 28, un troisième échangeur thermique eau/fluide frigorigène 36, et une sortie d'eau 38.

Le deuxième circuit d'eau 14 comprend aussi une vanne 42 à trois voies reliant l'entrée d'eau 34 à une première branche 44 et à une deuxième branche 46 du deuxième circuit d'eau 14.

La première branche 44 passe par le premier échangeur thermique 28 situé sur le premier circuit d'air 12, puis par le troisième échangeur thermique 36 de type eau/fluide frigorigène, pour rejoindre la sortie d'eau 38 du deuxième circuit d'eau 14.

Le troisième échangeur 36 est par exemple de technologie à plaques brasées.

La seconde branche 46 relie directement la vanne 42 à trois voies au troisième échangeur 36, sans passer par le premier échangeur 28.

En d'autres termes, le premier échangeur thermique 28 est disposé entre la vanne 42 à trois voies et le troisième échangeur thermique 36 sur une seule desdites deux branches 44, 46.

Le deuxième circuit 14 comprend en outre une pompe 40 apte à mettre en circulation l'eau de l'entrée 34 vers la sortie 38 en passant au moins par le troisième échangeur 36.

La sortie d'eau 38 et l'entrée d'eau 34 du deuxième circuit d'eau 14 de l'appareil 11 sont reliées au réseau 10.

En particulier dans l'installation 8A, la sortie d'eau 38 et l'entrée d'eau 34 du deuxième circuit d'eau 14 de l'appareil 11 sont reliées directement au réseau 10, en étant raccordées fluidiquement au réseau 10.

Le deuxième circuit d'eau 14 de l'appareil 11 et le réseau d'eau 10 du bâtiment forment ainsi une boucle d'eau fermée.

La pompe à chaleur 16 comprend un troisième circuit 48 de fluide frigorigène.

Le troisième circuit 48 est un circuit fermé qui relie successivement le deuxième échangeur thermique 30, un système compresseur 50, le troisième échangeur thermique 36, et au moins un détendeur 52A, 52B.

Le troisième circuit 48 comprend une vanne à inversion de cycle 54 disposée entre le système compresseur 50 et les échangeurs thermiques 30, 36. Le système compresseur 50 est ainsi relié aux échangeurs thermiques 30, 36 par l'intermédiaire de la vanne à inversion de cycle 54.

Dans le premier mode de réalisation illustré sur les figures 1 à 6, le système compresseur 50 comprend un unique compresseur 56A.

Le compresseur 56A peut être à vitesse fixe ou à vitesse variable.

La vanne à inversion de cycle 54 permet de définir un sens de circulation du fluide frigorigène dans le troisième circuit 48 selon le mode de fonctionnement de l'installation 8A. Différents modes de fonctionnement seront explicités plus bas.

Comme illustré sur la figure 1, le troisième circuit 48 de fluide comprend de plus une troisième branche de refroidissement 58 et une quatrième branche de chauffage 60 reliant chacune le troisième échangeur thermique 36 au deuxième échangeur thermique 30 sans passer par le système compresseur 50.

La troisième branche de refroidissement 58 comprend un premier dispositif anti-retour 62A et un premier détendeur 52A.

La quatrième branche de chauffage 60 comprend un deuxième dispositif anti-retour 62B et un deuxième détendeur 52B.

Les premier 52A et deuxième 52B détendeurs sont de préférence des détendeurs électroniques, propres à être ouverts ou fermés.

Les dispositifs anti-retour 62A et 62B de la troisième et de la quatrième branches autorisent respectivement un premier et un deuxième sens d'écoulement du fluide frigorigène, lesdits premier et deuxième sens étant opposés.

Plus précisément, le premier dispositif anti-retour 62A autorise la circulation du fluide frigorigène lors d'un mode de fonctionnement visant à refroidir l'eau circulant dans le deuxième circuit 14 entre l'entrée d'eau 34 et la sortie d'eau 38.

En particulier, le premier sens d'écoulement du fluide frigorigène est orienté du deuxième échangeur thermique 30 vers le troisième échangeur thermique 36.

Le premier détendeur 52A est notamment configuré pour être ouvert dans un mode de refroidissement de l'eau circulant dans le troisième échangeur 36, et pour être fermé dans un mode de chauffage de l'eau circulant dans le troisième échangeur 36.

Le deuxième dispositif anti-retour 62B autorise la circulation du fluide frigorigène lors d'un mode de fonctionnement visant à chauffer l'eau circulant dans le deuxième circuit 14 entre l'entrée d'eau 34 et la sortie d'eau 38.

En particulier, le deuxième sens d'écoulement du fluide frigorigène est orienté du troisième échangeur thermique 36 vers le deuxième échangeur thermique 30.

Le deuxième détendeur 52B est notamment configuré pour être ouvert dans un mode de chauffage de l'eau circulant dans le troisième échangeur 36, et pour être fermé dans un mode de refroidissement de l'eau circulant dans le troisième échangeur 36.

Le premier détendeur 52A et le deuxième détendeur 52B sont dimensionnés en conséquence. En particulier, une température d'évaporation du fluide frigorigène de la pompe à chaleur 16 est respectivement de l'ordre de 10°C à 15 °C dans le premier détendeur 52A et de l'ordre de -10 °C à 0 °C dans le deuxième détendeur 52B.

A cet effet, le premier détendeur 52A présente de préférence une puissance frigorifique supérieure à une puissance du deuxième détendeur 52B.

A titre d'exemple, le premier 52A et le deuxième 52B détendeurs présentent respectivement une puissance frigorifique de 35 kW à 85 kW et de 15 kW à 45 kW.

Les détendeurs sont de préférence un détendeur électronique. En variante, les détendeurs sont par exemple chacun un détendeur thermostatique. Un détendeur électronique présente l'avantage d'être plus fin et plus précis, par rapport à un détendeur thermostatique.

Avantageusement, comme illustré sur la figure 1, la troisième branche 58 et la quatrième branche 60 sont raccordées fluidiquement, en partageant un tronçon de raccordement 64.

Dans l'exemple de la figure 1, le tronçon de raccordement 64 est disposé, pour la troisième branche 58, entre le premier dispositif anti-retour 62A et le premier détendeur 52A de la troisième branche 58. De plus, il est disposé, pour la quatrième branche 60, entre le deuxième dispositif anti-retour 62B et le deuxième détendeur 52B de la quatrième branche 60.

Le tronçon de raccordement 64 comprend de préférence au moins une bouteille accumulatrice de liquide 66 et/ou une électrovanne 68 et/ou un filtre déshydrateur 70.

Le filtre déshydrateur 70 comprend un matériau absorbeur d'humidité et des filtres mécaniques à particules.

Le filtre déshydrateur 70 protège un pointeau des détendeurs 52A, 52B contre tout dépôt de particules sur un siège de ceux-ci, ce qui les rendrait non étanches à la fermeture.

La bouteille accumulatrice 66 permet notamment d'accommoder l'écoulement du fluide frigorigène aux deux détendeurs 52A, 52B.

Elle permet aussi de compenser un écart de volume entre le deuxième échangeur 30 et le troisième échangeur 36 en définissant un volume de stockage. Ce volume de stockage permet aux détendeurs de maitriser la quantité de fluide injecté dans les échangeurs 36, 30 pour respecter la plage d'application du système compresseur 50.

L'électrovanne 68 permet l'arrêt du système compresseur 50.

Au moins une sonde 18A de l'appareil 11 est propre à mesurer une température T1 de l'air extérieur en amont des premier et deuxième échangeurs thermiques 28, 30. Elle est notamment située en entrée d'air 24 du circuit 12 d'air. Elle fait par exemple saillie à l'intérieur de la conduite 32.

Au moins une sonde 18B de l'appareil 11 est propre à mesurer la température T2 de l'eau en amont du premier échangeur thermique 28. Elle est notamment située en entrée d'eau 34 du deuxième circuit d'eau 14, par exemple en amont de la vanne 42 à trois voies.

En outre, de préférence, une sonde 18C de l'appareil 11 est propre à mesurer la température T3 de l'eau en aval du troisième échangeur thermique 36. Elle est notamment disposée en sortie d'eau 38 du deuxième circuit d'eau 14, par exemple en sortie du troisième échangeur 36.

Comme énoncé ci-dessus, l'appareil 11 est de préférence monobloc. Ainsi, les éléments de l'appareil 11 sont agencés dans une enveloppe 71, représentée en pointillés sur la figure 1.

Dans le premier mode de réalisation, en particulier, l'entrée d'eau 34 et la sortie d'eau 38 sont matérialisées par des prises d'eau donnant sur l'extérieure de l'enveloppe 71.

L'appareil 11 forme ainsi un module unique indépendant propre à être raccordé de manière amovible au réseau d'eau 10.

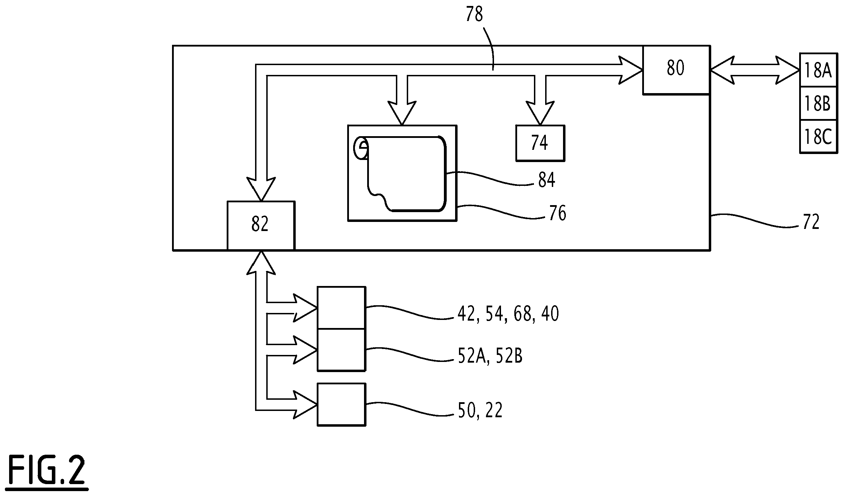

L'appareil 11 et l'installation 8A sont gérés par un dispositif 72 électronique de régulation, dont une représentation schématique est montrée à la figure 2.

Ledit dispositif 72 électronique est par exemple compris dans l'appareil 11.

Ledit dispositif 72 comporte notamment un processeur 74, une mémoire 76 et au moins un bus 78 de communication.

Par une interface 80 d'entrée, le dispositif 72 est notamment relié aux sondes de température de l'appareil 11.

Par l'intermédiaire d'une interface 82 de sortie, le fonctionnement de l'installation 8A est commandé par un programme 84.

Le programme 84 est par exemple stocké sous forme de logiciel dans la mémoire 76 et est propre à être exécuté par le processeur 74. En variante, non représentée, le programme 84 est réalisé sous forme d'un composant logique programmable, tel qu'un FPGA (de l'anglais Field Programmable Gâte Array), ou encore sous forme d'un circuit intégré dédié, tel qu'un ASIC (de l'anglais Application Specific Integrated Circuit).

Le programme 84 est configuré pour commander notamment le fonctionnement du ventilateur 22, des détendeurs 52A, 52B, du système compresseur 50, de la pompe 40 et desdites vannes 42, 54, 68 et est connecté aux sondes de température 18A, 18B, 18C.

La mémoire stocke aussi notamment la plage de température optimale prédéterminée [Tₘᵢₙ₁-Tₘₐₓ₁] de chaque dispositif de régulation 20,

Le programme 84 est configuré pour mettre en oeuvre un procédé de régulation de l'installation selon l'invention tel que décrit par la suite.

Un procédé de régulation de l'installation va maintenant être décrit en référence aux figures 1, et 3 à 6.

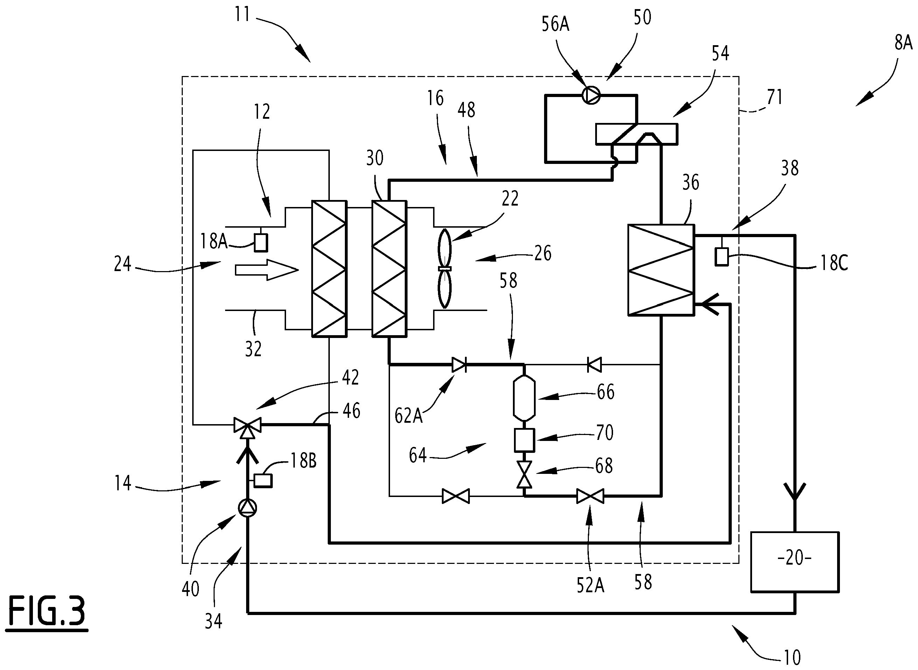

Le procédé comprend le fonctionnement de l'installation 8A selon un premier ou un deuxième mode de refroidissement de l'eau circulant dans le deuxième circuit 14 de l'entrée d'eau 34 vers la sortie d'eau 38, respectivement illustrés sur les figures 1 et 3, comme décrits plus en détails par la suite.

Ces modes de refroidissement sont par exemple mis en œuvre si au moins une sonde de température mesurant la température en un point du deuxième circuit 14 d'eau mesure une température supérieure à une température de consigne maximale. Cette température de consigne maximale est avantageusement inférieure ou égale à la borne supérieure Tₘₐₓ₁ de la plage de température optimale prédéterminée du dispositif de régulation 20 s'il n'y en a qu'un, ou la borne supérieure Tₘₐₓ₁ la plus basse des dispositifs de régulation 20.

Dans les premier et deuxième modes de refroidissement, au moins un dispositif de régulation 20 alimenté par l'eau du deuxième circuit 14 est par exemple dans l'état activé. Il cède des calories à l'eau du réseau 10 provenant de la sortie d'eau 38 afin de diminuer une température à l'intérieur du bâtiment.

Ainsi, les premier et deuxième modes de refroidissement sont mis en œuvre lorsqu'il est nécessaire de diminuer la température du réseau d'eau 10 afin d'assurer que chaque dispositif de régulation 20 fonctionne dans sa plage de température optimale prédéterminée.

Le premier mode de refroidissement va maintenant être décrit.

Dans le premier mode, l'air est mis en circulation par le ventilateur 22 dans le premier circuit 12, comme indiqué par la flèche sur la figure 1.

De plus, l'eau est mise en circulation dans le réseau 10 et le deuxième circuit 14 par la pompe 40.

Selon ce premier mode, les calories de l'eau sont prélevées directement par le premier circuit d'air 12, et la pompe à chaleur 16 n'est pas en fonctionnement.

Selon ledit premier mode, la vanne 42 à trois voies est positionnée de sorte que l'eau du deuxième circuit 14 suive la trajectoire représentée en trait épais sur la figure 1, passant par la première branche 44 et par le premier échangeur thermique 28.

L'eau est ainsi mise en circulation dans le premier échangeur 28 pour refroidir la température de l'eau.

Plus précisément, l'air pénètre dans le premier circuit 12 par l'entrée d'air 24, à la température T1 mesurée par la sonde 18A.

L'air traverse ensuite le premier échangeur thermique 28 et prélève une partie des calories à l'eau du deuxième circuit 14 circulant dans le premier échangeur 28.

L'eau est refroidie à une température T3 mesurée par la sonde 18C inférieure à la température T2 mesurée par la sonde 18B, et alimente chaque dispositif de régulation 20.

En particulier, l'eau est refroidie à une température inférieure à la borne supérieure Tₘₐₓ₁ de chaque dispositif de régulation 20.

Le deuxième mode de refroidissement va maintenant être décrit.

Selon ledit deuxième mode, la vanne 42 à trois voies est positionnée de manière à faire passer l'eau du deuxième circuit 14 par la deuxième branche 46 et à contourner le premier échangeur 28, comme illustré en trait épais à la figure 3.

Tout comme dans le premier mode de refroidissement, au moins un dispositif de régulation 20 est aussi dans l'état activé, et il cède des calories à l'eau du réseau 10 provenant de la sortie d'eau 38 afin de diminuer une température à l'intérieur du bâtiment.

Par ailleurs, le système compresseur 50 est mis en marche, et la vanne à inversion de cycle 54 est configurée de sorte que le fluide frigorigène prélève des calories pour refroidir l'eau circulant dans le troisième échangeur 36.

Le fluide frigorigène passe à l'état gazeux en prélevant lesdites calories de l'eau dans le troisième échangeur 36.

Il traverse ensuite le système compresseur 50 et monte en pression et en température.

Le fluide frigorigène arrive alors au deuxième échangeur 30 et cède des calories à l'air du premier circuit 12 qui traverse le deuxième échangeur thermique 30 et qui est mis en circulation par le ventilateur 22. Le fluide frigorigène passe à l'état liquide.

Par la suite, le fluide frigorigène circule depuis le deuxième échangeur 30 vers le troisième échangeur 36 en passant par la troisième branche 58.

Il traverse le premier dispositif anti-retour 62A et le premier détendeur 52A, en passant par le tronçon de raccordement 64.

Dans le premier mode, le premier détendeur 52A est en effet ouvert alors que le deuxième détendeur 52B est fermé.

A aucun moment du procédé de régulation, les premier et deuxième détendeurs 52A, 52B ne sont ouverts en même temps.

Dans l'exemple illustré sur la figure 3, le fluide passe par la bouteille accumulatrice de liquide 66, l'électrovanne 68 et le filtre déshydrateur 70.

Le fluide frigorigène retourne ensuite au troisième échangeur thermique 36.

En d'autres termes, l'air extérieur prélève des calories au fluide frigorigène du troisième circuit 48, qui les prélève à son tour à l'eau du deuxième circuit 14 par l'intermédiaire du troisième échangeur thermique 36.

Le procédé est propre à faire passer le fonctionnement de l'installation 8A selon l'un ou l'autre des premiers et deuxième modes de refroidissement, en fonction des températures T2 d'entrée d'eau et T1 d'entrée d'air extérieur.

Pour cela, le procédé comprend la mesure de la température T2 d'entrée d'eau et la température T1 d'entrée d'air extérieur.

Ces mesures sont préférentiellement mises en œuvre à une pluralité d'instants de mesure, par exemple séparés par des intervalles de temps régulier.

Le procédé comprend alors la comparaison de la température T2 d'entrée d'eau à un premier seuil, cette comparaison étant par exemple mise en œuvre à chaque instant de mesure.

Le premier seuil correspond par exemple à T1 + ATr, ATr étant un écart de température mémorisé dans la mémoire 76.

Le premier mode de refroidissement de la figure 1 est mis en œuvre si la température T2 d'entrée d'eau est supérieure au premier seuil dépendant de ladite température T1 d'entrée d'air extérieur.

Avantageusement, l'écart ATr est nul, le premier mode de refroidissement étant mis en œuvre si la température T2 d'entrée d'eau est supérieure à la température T1 d'entrée d'air extérieur. En variante, l'écart ATr est supérieur ou égal à 7°C. Un tel écart peut être modifié en fonction du nombre de dispositifs de régulation 20 connectés sur le réseau d'eau 10.

Si la température T2 d'entrée d'eau est inférieure audit premier seuil ATr, le deuxième mode de refroidissement de la figure 3 est mis en œuvre.

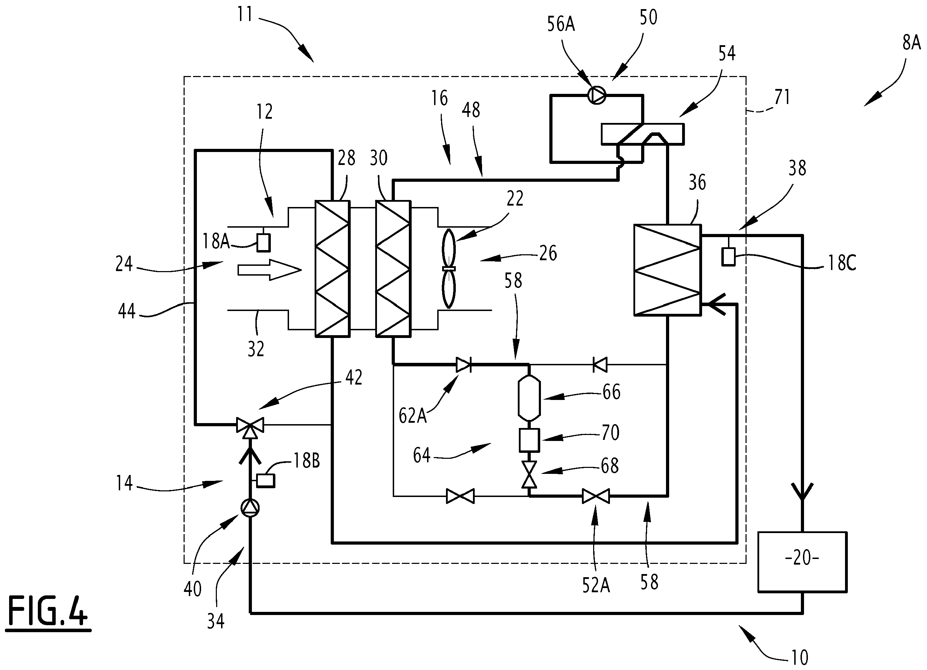

De plus, le procédé de régulation comprend le fonctionnement de l'installation 8A dans un troisième mode de stockage de refroidissement, illustré en trait épais sur la figure 4.

Dans ledit troisième mode de stockage de refroidissement, aucun dispositif de régulation 20 n'est dans l'état activé. Aucun dispositif de régulation 20 ne cède alors sensiblement de calories à l'eau provenant de la sortie d'eau 38. De même, aucun ne prélève sensiblement de calories à l'eau.

De plus, ce troisième mode de stockage de refroidissement diffère du premier mode de refroidissement en ce que le système compresseur 50 est mis en marche, et la vanne à inversion de cycle 54 est configurée de sorte que le fluide frigorigène prélève des calories à l'eau circulant dans le troisième échangeur 36 pour refroidir l'eau circulant dans le troisième échangeur 36.

Ce troisième mode, par exemple mis en œuvre via une commande manuelle par un opérateur du service de maintenance, un programme horaire par exemple mémorisé dans la mémoire 76, ou suite à une analyse de prévisions météo, permet de stocker du froid en prévision de besoins décalés. En particulier, il permet de garantir que la température du réseau d'eau 10 ne s'élève pas au-dessus de la plage de température optimale des dispositifs de régulation 20 lorsque ces dispositifs ne sont pas activés, afin qu'ils puissent fonctionner de manière optimale dès leur activation.

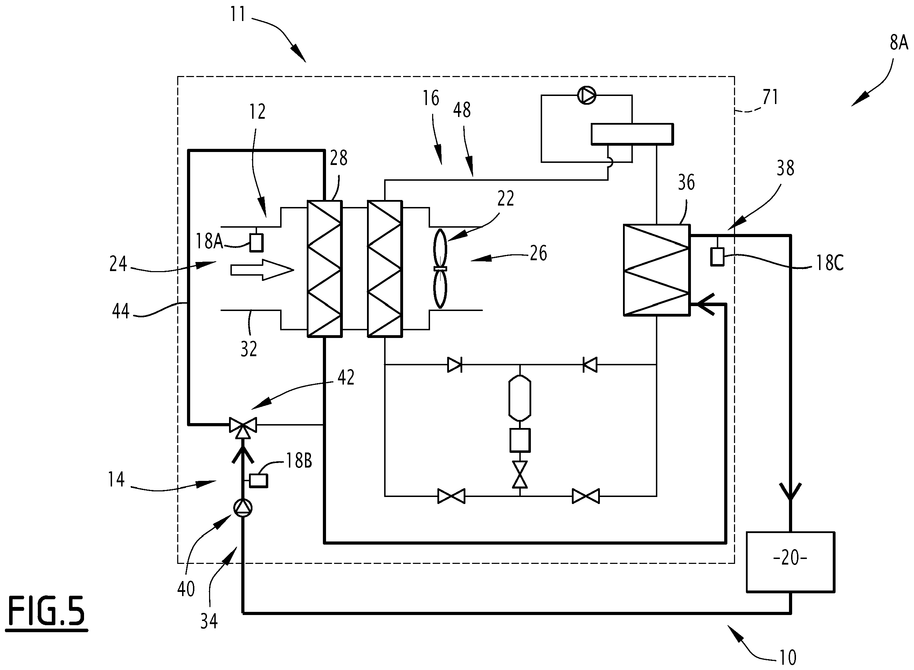

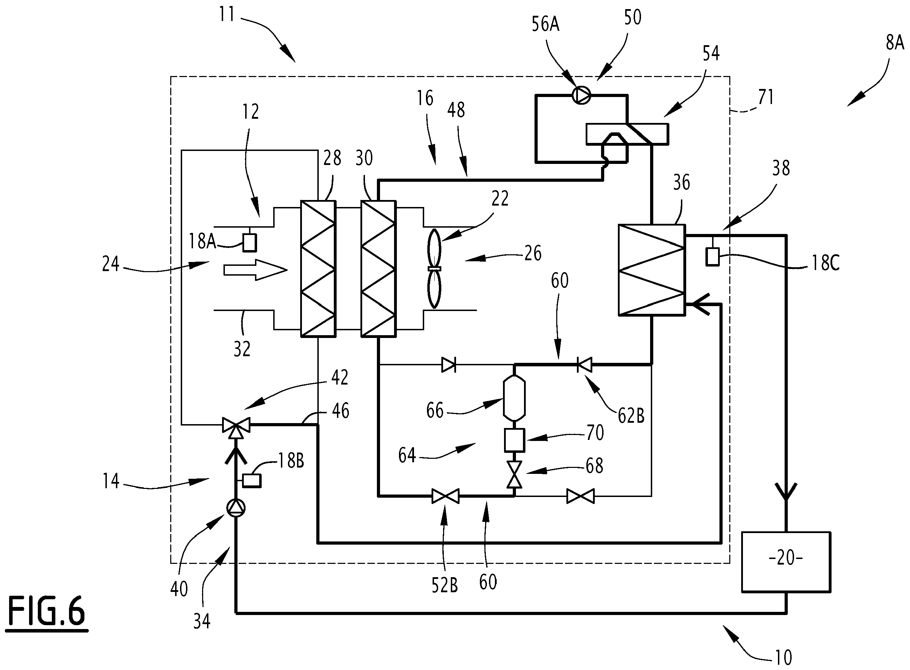

Le procédé comprend le fonctionnement de l'installation 8A selon un quatrième mode de chauffage de l'eau circulant dans le deuxième circuit 14 de l'entrée d'eau 34 vers la sortie d'eau 38, illustré sur la figure 5, ou selon un cinquième mode de chauffage de l'eau circulant dans le deuxième circuit 14 de l'entrée d'eau 34 vers la sortie d'eau 38, illustré sur la figure 6, comme décrits plus en détails par la suite.

Ces modes de chauffage sont par exemple mis en œuvre si au moins une sonde de température mesurant la température en un point du deuxième circuit 14 d'eau mesure une température inférieure à une température de consigne maximale. Cette température de consigne maximale est avantageusement supérieure ou égale à la borne inférieure Tₘᵢₙ₁ de la plage de température optimale prédéterminée du dispositif de régulation 20 s'il n'y en a qu'un, ou la borne inférieure Tₘᵢₙ₁ la plus haute des dispositifs de régulation 20.

Dans les quatrième et cinquième modes de chauffage, au moins un dispositif de régulation 20 alimenté par l'eau du deuxième circuit 14 est dans l'état activé. Il prélève des calories à l'eau du réseau 10 provenant de la sortie d'eau 38 afin d'augmenter une température à l'intérieur du bâtiment.

Ainsi, les quatrième et cinquième modes de chauffage sont mis en œuvre lorsqu'il est nécessaire d'augmenter la température du réseau d'eau 10 afin d'assurer que chaque dispositif de régulation 20 fonctionne dans sa plage de température optimale prédéterminée.

Le quatrième mode de chauffage va maintenant être décrit.

Dans le quatrième mode, l'air est mis en circulation par le ventilateur 22 dans le premier circuit 12, comme indiqué par la flèche sur la figure 5.

De plus, l'eau est mise en circulation dans le réseau 10 et le deuxième circuit 14 par la pompe 40.

Selon ce quatrième mode, l'eau prélève directement des calories à l'air extérieur circulant dans le premier circuit d'air 12, et la pompe à chaleur 16 n'est pas en fonctionnement.

Selon ledit quatrième mode, la vanne 42 à trois voies est positionnée de sorte que l'eau du deuxième circuit 14 suive la trajectoire représentée en trait épais sur la figure 5, passant par la première branche 44 et par le premier échangeur thermique 28.

L'eau est ainsi mise en circulation dans le premier échangeur 28 pour augmenter la température de l'eau.

Plus précisément, l'air pénètre dans le premier circuit 12 par l'entrée d'air 24, à la température T1 mesurée par la sonde 18A.

L'air traverse ensuite le premier échangeur thermique 28 et cède une partie de ses calories à l'eau du deuxième circuit 14 circulant dans le premier échangeur 28.

L'eau est chauffée à une température T3 mesurée par la sonde 18C supérieure à la température T2 mesurée par la sonde 18B, et alimente chaque dispositif de régulation 20.

En particulier, l'eau est réchauffée à une température supérieure à la borne inférieure Tₘᵢₙ₁ de chaque dispositif de régulation 20.

Le cinquième mode de chauffage va maintenant être décrit.

Selon ledit cinquième mode, la vanne 42 à trois voies est positionnée de manière à faire passer l'eau du deuxième circuit 14 par la deuxième branche 46 et à contourner le premier échangeur 28, comme illustré en trait épais à la figure 6.

Tout comme dans le quatrième mode de chauffage, au moins un dispositif de régulation 20 est aussi dans l'état activé, et il prélève des calories à l'eau du réseau 10 provenant de la sortie d'eau 38 afin d'augmenter une température à l'intérieur du bâtiment.

Par ailleurs, le système compresseur 50 est mis en marche, et la vanne à inversion de cycle 54 est configurée de sorte que le fluide frigorigène cède des calories pour chauffer l'eau circulant dans le troisième échangeur 36.

Le fluide frigorigène passe à l'état liquide en cédant lesdites calories à l'eau dans le troisième échangeur 36.

Par la suite, le fluide frigorigène circule depuis le troisième échangeur 36 vers le deuxième échangeur 30 en passant par la quatrième branche 60.

Il traverse le deuxième dispositif anti-retour 62B et le deuxième détendeur 52B, en passant par le tronçon de raccordement 64.

Dans le cinquième mode, le deuxième détendeur 52B est ouvert alors que le premier détendeur 52A est fermé.

Dans l'exemple illustré, le fluide passe ainsi par la bouteille accumulatrice de liquide 66, l'électrovanne 68 et le filtre déshydrateur 70.

Le fluide frigorigène arrive alors au deuxième échangeur et prélève des calories à l'air du premier circuit 12 qui traverse le deuxième échangeur thermique 30. Le fluide frigorigène passe à l'état gazeux.

Il traverse ensuite le système compresseur 50 avant de retourner au troisième échangeur thermique 36.

En d'autres termes, l'air extérieur cède des calories au fluide frigorigène du troisième circuit 48, qui les cède à son tour à l'eau du deuxième circuit 14 par l'intermédiaire du troisième échangeur thermique 36.

Le procédé est propre à faire passer le fonctionnement de l'installation 8A selon l'un ou l'autre des quatrième et cinquième modes de chauffage, en fonction des températures T2 d'entrée d'eau et T1 d'entrée d'air extérieur.

Pour cela, le procédé comprend la mesure de la température T2 d'entrée d'eau et la température T1 d'entrée d'air extérieur.

Ces mesures sont préférentiellement mises en œuvre à une pluralité d'instants de mesure, par exemple séparés par des intervalles de temps régulier.

Le procédé comprend alors la comparaison de la température T2 d'entrée d'eau à un deuxième seuil, cette comparaison étant par exemple mise en œuvre à chaque instant de mesure.

Le deuxième seuil correspond par exemple à T1 + ATc, ATc étant un écart de température mémorisé dans la mémoire 76.

Le quatrième mode de chauffage de la figure 5 est mis en œuvre, si la température T2 d'entrée d'eau est inférieure audit deuxième seuil dépendant de ladite température T1 d'entrée d'air extérieur.

Avantageusement, l'écart ATc est nul, le quatrième mode de chauffage étant mis en œuvre si la température T2 d'entrée d'eau est inférieure à la température T1 d'entrée d'air extérieur. En variante, l'écart ATc est supérieur ou égal à 2°C. Un tel écart peut être modifié en fonction du nombre de dispositifs de régulation 20 connectés sur le réseau d'eau 10

Si la température T2 d'entrée d'eau est supérieure audit deuxième seuil ATc, le cinquième mode de chauffage de la figure 6 est mis en œuvre.

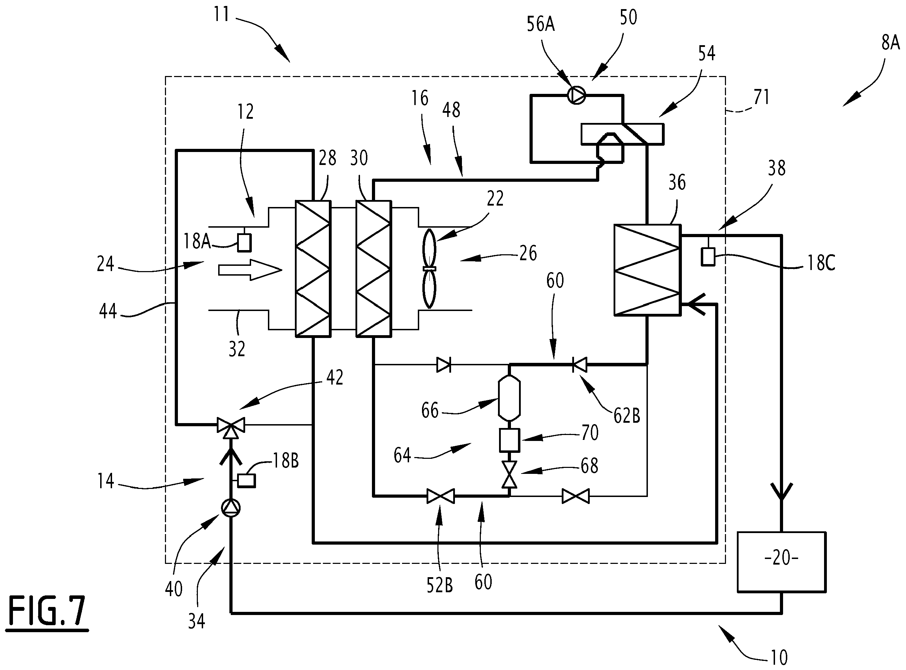

Le procédé de régulation comprend aussi le fonctionnement de l'installation 8A dans un sixième mode de stockage de chauffage, illustré en trait épais sur la figure 7. De même que le troisième mode de stockage de refroidissement, ce sixième mode est par exemple mis en œuvre via une commande manuelle par un opérateur du service de maintenance, un programme horaire par exemple mémorisé dans la mémoire 76, ou suite à une analyse de prévisions météo.

Ce sixième mode de stockage de chauffage diffère du quatrième mode de chauffage en ce qu'aucun dispositif de régulation 20 n'est dans l'état activé.

Aucun dispositif de régulation 20 ne prélève sensiblement de calories à l'eau provenant de la sortie d'eau 38. De même, aucun ne cède sensiblement de calories à l'eau.

De plus, ce sixième mode de stockage de chauffage diffère du quatrième mode de chauffage en ce que le système compresseur 50 est mis en marche, et la vanne à inversion de cycle 54 est configurée de sorte que le fluide frigorigène cède des calories pour chauffer l'eau circulant dans le troisième échangeur 36.

Ce sixième mode permet de stocker de la chaleur en prévision de besoins décalés.

En particulier, il permet de garantir que la température du réseau d'eau 10 ne diminue pas en-dessous de la plage de température optimale des dispositifs de régulation 20 lorsque ces dispositifs ne sont pas activés, afin qu'ils puissent fonctionner de manière optimale dès leur activation.

Avantageusement, le procédé est aussi propre à assurer la protection hors-gel de l'eau dans le deuxième circuit 14, en particulier lorsque l'eau n'est pas mise en circulation dans le deuxième circuit 14, la pompe 40 ne fonctionnant pas.

Le procédé comprend une mesure d'une température de contrôle de l'eau en au moins un point du deuxième circuit 14.

Cette température de contrôle est par exemple la température T2 d'entrée d'eau ou la température T3 de sortie d'eau 38.

Cette mesure est mise en œuvre à une pluralité d'instants de mesure, par exemple séparés par des intervalles de temps régulier.

Si la température de contrôle de l'eau mesurée audit point est inférieure à une température seuil prédéterminée de prévention de gel de l'eau, le procédé comprend une étape de prévention de gel.

L'étape de prévention de gel comprend la mise en circulation de l'eau dans le deuxième circuit 14 à un débit prédéterminé.

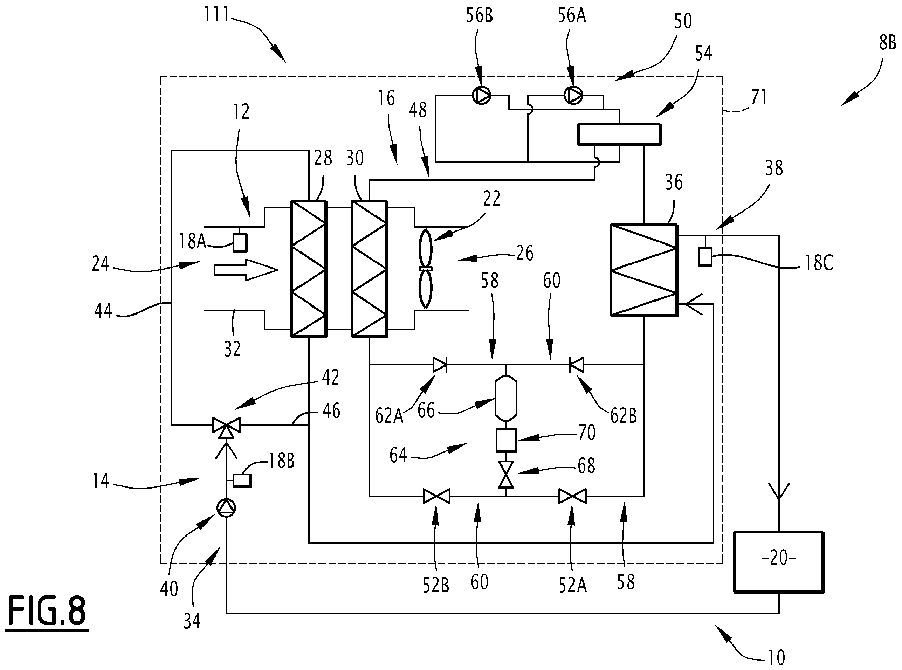

Une installation 8B, selon un deuxième mode de réalisation de l'invention, est illustrée sur la figure 8.

L'installation 8B comprend un appareil 111 selon un deuxième mode de réalisation.

L'installation 8B et l'appareil 111 correspondent respectivement à la description ci-dessus de l'installation 8A et de l'appareil 11, à l'exception du fait que le système compresseur 50 de l'appareil 111 comprend deux compresseurs 56A, 56B.

Les deux compresseurs 56A, 56B sont propres à être mis en marche de manière indépendante.

Lors des deuxième, troisième, cinquième et sixième modes de fonctionnement du procédé de régulation de l'installation 8B, les deux compresseurs 56A, 56B sont avantageusement mis en marche lorsque la température T2 de l'eau est inférieure à une température extrême basse prédéterminée ou est supérieure à une température extrême haute prédéterminée.

Ceci permet de fournir une puissance maximale pour la régulation de la température dans des conditions extrêmes de températures extérieures ou de corriger une importante dérive de la température de l'eau du deuxième circuit 14.

De plus, lors de l'étape de prévention de gel, les deux compresseurs 56A, 56B sont de préférence mis en marche.

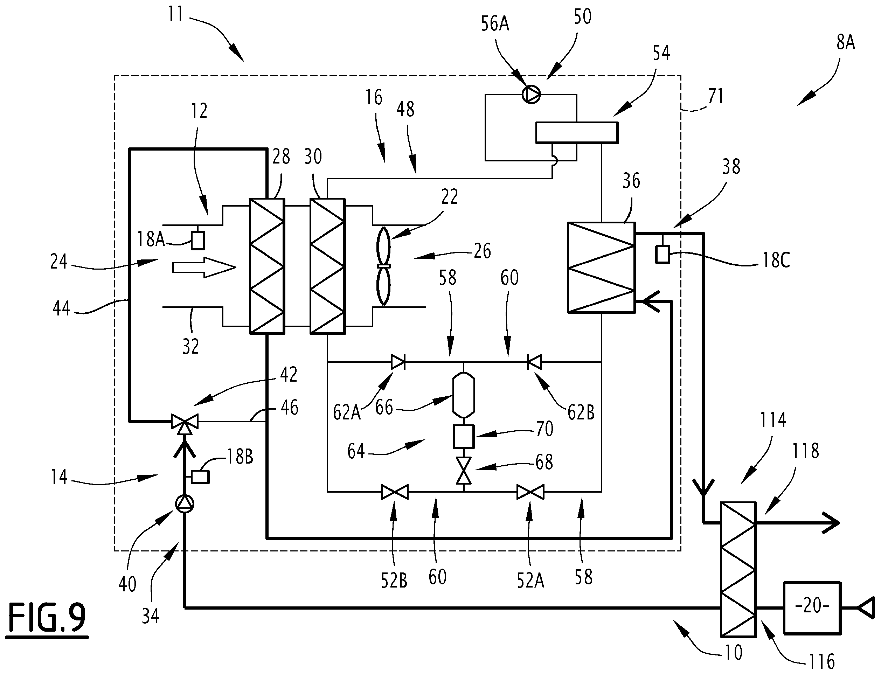

Une installation 8C, selon un troisième mode de réalisation de l'invention, est illustrée sur la figure 9.

L'installation 8C correspond essentiellement à la description ci-dessus de l'installation 8A. L'installation 8C comprend notamment un réseau d'eau 10 et un appareil 11 tels que décrits ci-dessus.

En outre, l'installation 8C comprend un échangeur thermique d'interface 114 interposé entre le deuxième circuit d'eau 14 de l'appareil 11 et le réseau d'eau 10.

La sortie d'eau 38 et l'entrée d'eau 34 du deuxième circuit d'eau 14 de l'appareil 11 sont ainsi indirectement reliées au réseau 10.

L'échangeur d'interface 114 est de type liquide/liquide.

Il permet d'assurer un échange thermique entre l'eau circulant dans le deuxième circuit 14 et l'eau circulant dans le réseau d'eau 10.

En particulier, l'échangeur d'interface 114 comprend une entrée d'eau secondaire 116 et une sortie d'eau secondaire 118, chacune étant raccordée au réseau d'eau 10.

D'autre part, l'entrée d'eau 34 et la sortie d'eau 38 du deuxième circuit 14 sont raccordées fluidiquement l'une à l'autre par l'intermédiaire de l'échangeur d'interface 114.

Le deuxième circuit d'eau 14 forme ainsi une boucle fermée, isolée fluidiquement du réseau d'eau 10.

L'eau circulant dans le deuxième circuit d'eau 14 comprend avantageusement plus de 40% de glycol afin d'assurer une protection jusqu'à une température extérieure de - 15°C. Les risques de gel de l'eau circulant dans le deuxième circuit 14 sont ainsi évités, même lors de coupure de courant.

Dans l'exemple de la figure 9, l'échangeur d'interface 114 est illustré à l'extérieur de l'appareil de régulation thermique 11, en particulier à l'extérieur de l'enveloppe 71.

En variante non représentée, l'échangeur d'interface 114 est monobloc avec l'appareil, l'appareil formant ainsi un troisième mode de réalisation.

Dans ce troisième mode de réalisation de l'appareil, le deuxième circuit 14 est intégralement disposé à l'intérieur de l'enveloppe 71 de l'appareil, et l'entrée d'eau secondaire 116 et la sortie d'eau secondaire 118 de l'échangeur d'interface 114 sont matérialisées par des prises d'eau donnant sur l'extérieure de l'enveloppe 71.

Grâce aux caractéristiques ci-dessus, les besoins en refroidissement et/ou en chauffage du réseau d'eau 10 du bâtiment sont satisfaits et il est possible de répondre de manière satisfaisante à une demande de rétablissement de la température du réseau d'eau 10 dans une plage de température prédéterminée.

L'installation est simple et permet ainsi de garantir un fonctionnement optimal des dispositifs de régulation 20 couplés au réseau d'eau 10.

L'appareil 11 étant monobloc, son installation et son raccordement sont particulièrement simples.

En particulier, le premier échangeur 28 permet, en cas de température extérieure haute ou basse, de respectivement chauffer ou refroidir l'eau du deuxième circuit 14 sans faire appel à la pompe à chaleur 16. La performance du système est donc améliorée.

## Revendications

1. Appareil (11, 111) de régulation thermique d'un réseau d'eau (10) d'un bâtiment, comportant :
- un premier circuit d'air (12), ledit premier circuit (12) comprenant un ventilateur (22), une entrée d'air (24) propre à être reliée à l'extérieur du bâtiment, une sortie d'air (26) également propre à être reliée à l'extérieur dudit bâtiment, un premier échangeur thermique air/eau (28) et un deuxième échangeur thermique air/fluide frigorigène (30), le premier échangeur thermique (28) et le deuxième échangeur thermique (30) étant interposés entre l'entrée d'air (24) et la sortie d'air (26) du premier circuit (12) ;
- un deuxième circuit d'eau (14) comprenant une entrée d'eau (34), une sortie d'eau (38), un troisième échangeur thermique (36) eau/fluide frigorigène, et une vanne à trois voies (42) reliant l'entrée d'eau (34) dudit deuxième circuit d'eau (14) à une première branche (44) et à une deuxième branche (46), lesdites branches (44, 46) étant toutes deux reliées au troisième échangeur thermique (36), le premier échangeur thermique (28) étant disposé entre ladite vanne à trois voies (42) et ledit troisième échangeur thermique (36) sur une seule desdites deux branches (44), l'entrée d'eau (34) et la sortie d'eau (38) étant propres à être reliées audit réseau d'eau (10) du bâtiment ; et
- une pompe à chaleur (16) comprenant un troisième circuit (48) de fluide frigorigène, le troisième circuit (48) de fluide frigorigène étant fermé et reliant successivement le deuxième échangeur thermique (30), un système compresseur (50), le troisième échangeur thermique (36), et au moins un premier détendeur (52A, 52B), le troisième circuit (48) comprenant une vanne à inversion de cycle (54) disposée entre le système compresseur (50) et les échangeurs thermiques.

2. Appareil (11, 111) selon la revendication 1, dans lequel le troisième circuit (48) de fluide frigorigène comprend une troisième branche de refroidissement (58) et une quatrième branche de chauffage (60) reliant chacune le troisième échangeur thermique (36) au deuxième échangeur thermique (30) sans passer par le système compresseur (50), la troisième branche de refroidissement (58) comprenant le premier détendeur (52A) et la quatrième branche de chauffage (60) comprenant un deuxième détendeur (52B).

3. Appareil (11, 111) selon la revendication 2, dans lequel le premier détendeur (52A) présente une puissance supérieure à une puissance du deuxième détendeur (52B).

4. Appareil (11, 111) selon l'une quelconque des revendications 2 ou 3, dans lequel la troisième branche (58) et la quatrième branche (60) du troisième circuit (48) de fluide frigorigène comprennent chacune un dispositif anti-retour (62A, 62B) ; les dispositifs anti-retour de la troisième (58) et de la quatrième (60) branches autorisant respectivement un premier et un deuxième sens d'écoulement du fluide frigorigène, lesdits premier et deuxième sens étant opposés.

5. Appareil (11, 111) selon la revendication 4, dans lequel le premier sens d'écoulement du fluide frigorigène est orienté du deuxième échangeur thermique (30) vers le troisième échangeur thermique (36) ; et le deuxième sens d'écoulement du fluide frigorigène est orienté du troisième échangeur thermique (36) vers le deuxième échangeur thermique (30).

6. Appareil (11, 111) selon l'une quelconque des revendications 4 ou 5, dans lequel la troisième branche (58) et la quatrième branche (60) sont raccordées fluidiquement, en partageant un tronçon de raccordement (64), le tronçon de raccordement (64) étant disposé, pour chacune desdites troisième et quatrième branches (58, 60), entre le dispositif anti-retour (62A, 62B) et le détendeur (52A, 52B) de ladite branche (58, 60).

7. Appareil (11, 111) selon l'une quelconque des revendications 1 à 6, dans lequel l'appareil est monobloc.

8. Installation (8A, 8B, 8C) comprenant un bâtiment comportant un réseau d'eau (10) et un appareil (11, 111) de régulation thermique du réseau d'eau (10) selon l'une quelconque des revendications 1 à 7, l'entrée d'air (24) et la sortie d'air (26) étant reliées à l'extérieur du bâtiment, l'entrée d'eau (34) et la sortie d'eau (38) étant reliées audit réseau d'eau (10) du bâtiment.

9. Installation (8A, 8B) selon la revendication 8, dans laquelle l'entrée d'eau (34) et la sortie d'eau (38) sont raccordées fluidiquement au réseau d'eau (10) du bâtiment, le deuxième circuit d'eau (14) et le réseau d'eau (10) formant ainsi une boucle fermée.

10. Installation (8C) selon la revendication 8, comprenant un échangeur thermique d'interface (114) interposé entre le deuxième circuit d'eau (14) et le réseau d'eau (10) ;
l'échangeur d'interface (114) comprenant une entrée d'eau secondaire (116) et une sortie d'eau secondaire (118), chacune étant raccordée fluidiquement au réseau d'eau (10) ;
l'entrée d'eau (34) et la sortie d'eau (38) du deuxième circuit (14) étant raccordées fluidiquement l'une à l'autre par l'intermédiaire de l'échangeur d'interface (114), le deuxième circuit d'eau (14) formant ainsi une boucle fermée, isolée fluidiquement du réseau d'eau (10)

11. Installation (8A, 8B, 8C) selon l'une quelconque des revendications 9 à 10, comprenant au moins un dispositif de régulation (20) de température disposé sur le réseau d'eau (10), ledit dispositif de régulation (20) étant apte à prélever ou céder des calories à l'eau dudit réseau (10).

12. Procédé de régulation d'une installation (8A, 8B, 8C) selon l'une des revendications 8 à 11, comprenant :
- la mesure d'une température en un point du deuxième circuit (14) d'eau ;
- si la température mesurée audit point du deuxième circuit (14) d'eau est supérieure à une température de consigne maximale (Tₘₐₓ₁) :
- la mesure d'une température d'entrée d'air extérieur sur le premier circuit (12), en amont du premier et du deuxième échangeurs thermiques (28, 30) ;
- la mesure d'une température d'entrée d'eau (34) en amont du premier échangeur (28) ;
- si la température d'entrée d'eau (34) est supérieure à un premier seuil dépendant de ladite température d'entrée d'air extérieur, la mise en circulation de l'eau du deuxième circuit (14) dans le premier échangeur (28) pour refroidir l'eau circulant dans le premier échangeur (28), et/ou ;
- ou, si la température mesurée audit point du deuxième circuit (14) d'eau est inférieure à une température de consigne minimale (Tₘᵢₙ₁) :
- la mesure d'une température d'entrée d'air extérieur sur le premier circuit (12), en amont du premier et du deuxième échangeurs thermiques (28, 30) ;
- la mesure d'une température d'entrée d'eau (34) en amont du premier échangeur (28) ;
- si la température d'entrée d'eau (34) est inférieure à un deuxième seuil dépendant de ladite température d'entrée d'air extérieur, la mise en circulation de l'eau du deuxième circuit (14) dans le premier échangeur (28) pour chauffer l'eau circulant dans le premier échangeur (28).

13. Procédé selon la revendication 12, comprenant de plus, si la température mesurée audit point du deuxième circuit (14) d'eau est supérieure à la température de consigne maximale (Tₘₐₓ₁) et si la température d'entrée d'eau (34) est inférieure audit premier seuil, la mise en marche du système compresseur (50) et la configuration de la vanne à inversion de cycle (54) de sorte que le fluide frigorigène prélève des calories à l'eau circulant dans le troisième échangeur (36) pour refroidir l'eau circulant dans le troisième échangeur (36).

14. Procédé selon l'une quelconque des revendications 12 ou 13, comprenant de plus, si la température mesurée audit point du deuxième circuit (14) d'eau est inférieure à la température de consigne minimale (Tₘᵢₙ₁) et si la température d'entrée d'eau (34) est supérieure audit deuxième seuil, la mise en marche du système compresseur (50) et la configuration de la vanne à inversion de cycle (54) de sorte que le fluide frigorigène cède des calories à l'eau circulant dans le troisième échangeur (36) pour chauffer l'eau circulant dans le troisième échangeur (36).

15. Procédé selon l'une quelconque des revendications 12 à 14, dans lequel l'installation (8A, 8B, 8C) comprend au moins un dispositif de régulation (20) de température disposé sur le réseau d'eau (10), ledit dispositif de régulation (20) étant apte à prélever ou céder des calories à l'eau du réseau d'eau (10), ledit dispositif de régulation (20) étant propre à fonctionner de manière optimale lorsque l'eau du réseau d'eau (10) présente une température comprise dans une plage de température optimale prédéterminée ([Tₘᵢₙ₁-Tₘₐₓ₁]),
la température de consigne maximale étant inférieure ou égale à une borne supérieure (Tₘₐₓ₁) de ladite plage de température optimale prédéterminée et la température de consigne minimale étant supérieure ou égale à une borne inférieure (Tₘᵢₙ₁) de ladite plage de température.
